# EUROPEAN PATENT SPECIFICATION

(11) **EP 0 739 008 B1**
(45) Date of publication and mention of the grant of the patent: **27.03.2002**
(21) Application number: 96302593.7
(22) Date of filing: 12.04.1996
(51) Int. Cl.: G11B 20/00

(54) **Apparatus for recording and reproducing information**
Gerät zur Aufzeichnung und Wiedergabe von Informationen
Appareil pour l'enregistrement et la reproduction d'information

(30) Priority: 13.04.1995 JP 8845395
(43) Date of publication of application: 23.10.1996
(73) Proprietor: PIONEER ELECTRONIC CORPORATION, Meguro-ku Tokyo-to (JP)
(72) Inventor: Tozaki, Akihiro, c/o Pioneer Electronic Corp., Tsurugashima-shi, Saitama-ken (JP); Yamamoto, Kaoru, c/o Pioneer Electronic Corp., Tsurugashima-shi, Saitama-ken (JP)
(74) Representative: Hutchins, Michael Richard

(56) References cited:
- EP-A- 0 286 437
- EP-A- 0 581 227
- EP-A- 0 593 305
- EP-A- 0 635 828
- EP-A- 0 644 474
- EP-A- 0 668 695
- US-A- 5 027 396
- US-A- 5 418 853

## Description

The present invention relates to an apparatus for recording and reproducing information, and more particularly to an information recording apparatus for recording information on a recording medium such as an optical disc and an information reproducing apparatus for reproducing information from the optical disc.

Recently, recording media such as optical discs and video tapes are generally used for the business use in a so-called karaoke room or a movie theater. Conventionally, information of this kind is recorded on the medium as an analog signal. However, in these days, such information is recorded by the digital recording because digital recording of the video signal enables high quality reproduction and the recorded signal can be easily operated by the computer. Information recorded on the recording medium may be reproduced not only for the business use but the private use. For example, an optical disc carrying karaoke songs may be used in a singing exercise at home, and an optical video disc may be used for a family enjoyment when reproduced by a television system at home.

However, if an identical standard is employed in the optical discs for both the business use and the private use, the business-use optical disc can be reproduced by using the reproduction apparatus for the private use. Specifically, in a case of movie, the optical disc (such as a laser disc) for the private use is put on the market several months or a few years after the movie is shown to general people in the theater. If the commercial optical disc is illegally put on the market, the supplier and/or the managing company of the movie is given unexpected damages, especially when the movie is popular.

This problem may be solved by employing different standards for the business-use disc and the private-use disc. However, by so doing, the reproduction apparatuses of different types, for the business-use disc and for the private-use disc, should be prepared. Therefore, the mass production becomes difficult, thereby making difficult to lower the price of the unit reproduction apparatus. As an alternative way, it is conceivable to unify the standard of the disc and separate the distribution routes of the business-use discs and the private-use discs. However, even if the separation of the distribution routes is tried, it is quite difficult to actually eliminate the illegal distribution of the business-use disc completely. Therefore, if a user has an apparatus capable of copying the contents of the business-use disc, the copied products are available for general people. A yet alternative way is to record copy-guard signals on the business-use discs, however, if the business-use disc is copied by using the replication method, the copied products may be available for the normal reproduction apparatus for the private-use.

EP-A-0668695, which is cited under Art. 54(3) EPC, discloses an apparatus for reproducing information from a data medium which includes main data and medium protection data specific to the data medium. The apparatus includes a section for generating apparatus protection data specific to the reproduction apparatus and a section which combines the apparatus protection data with the medium protection data to define a protection level. Based on the protection level, reproduction of the data is restricted, with stepwise variations in the restriction occurring in accordance with changes in the protection level. An example of a restriction is a degraded resolution within specified regions of specified frames of the video signal.

EP-A-0286437 describes a reproducing apparatus which allows recorded information to be reproduced only if the information has been recorded with the particular device. To this end, a unique device is recorded as additional information. This identification is then compared with te device ID before reproduction.

It is an object of the present invention to provide an apparatus for recording information on and reproducing information from a business-use optical disc, by which it is capable to prohibit the reproduction of the business-use optical disc by the reproduction apparatus for the private use.

The present invention therefore provides an apparatus for recording information on a recording medium as set out in claim 1.

In accordance with the apparatus thus constructed, the recording information is received and processed by the processor, and the recording signal is produced. On the other hand, additional signal is produced by the multiplexer by multiplexing the reproduction apparatus specifying information with the additional information. Then, the additional signal is added to the recording signal, and the added signal is recorded . on the recording medium. Therefore, it is possible to judge whether the currently-used reproduction apparatus is allowed to reproduce the recording signal of the recording medium.

In addition, when the additional signal is recorded on the recording medium at the area which is read by the reproduction apparatus prior to the recording signal, it is possible to make the judgment immediately after the insertion of the recording medium.

The present invention also provides an apparatus for reproducing information from a recording medium as set out in claim 6.

In a preferred embodiment, the recording information is read out by the reading unit, and is then demodulated from the demodulated signal, the reproduction apparatus specifying information is detected, and it is judged whether the currently-used reproduction apparatus is specified by the reproduction apparatus specifying information. If the currently-used reproduction apparatus is not specified, the reproduction of the recording information by the reproduction apparatus is prohibited. Therefore, it is possible to prohibit the reproduction of the recording information by non-allowed reproduction apparatus.

The present invention also relates to a method of reproducing information as set out in claim 10, and a method of reproducing information as set out in claim 11.

The nature, utility, and further features of this invention will be more clearly apparent from the following detailed description with respect to preferred embodiment of the invention when read in conjunction with the accompanying drawings briefly described below.

In the drawings;
FIG. 1 is a block diagram illustrating a configuration of an information recording apparatus according to the present invention;
FIG. 2 is a list showing a definition of a reproduction apparatus specifying signal;
FIG. 3 is a diagram illustrating an allocation of recording area on an optical disc;
FIG. 4 is a list showing a definition of basic volume descriptors;
FIG. 5 is a list showing an example of assignment of the reproduction apparatus specifying signal;
FIG. 6 is a block diagram illustrating a configuration of an information reproduction apparatus according to the present invention;
FIG. 7 is a flowchart illustrating an operation of the information reproduction apparatus; and
FIG. 8 is another flowchart illustrating an operation of the information reproduction apparatus.

The preferred embodiments of the present invention will now be described below with reference to the attached drawings. It is noted that the following embodiments are directed to a case where the present invention is applied to an apparatus for recording information on an optical disc and an apparatus for reproducing the recorded information therefrom.

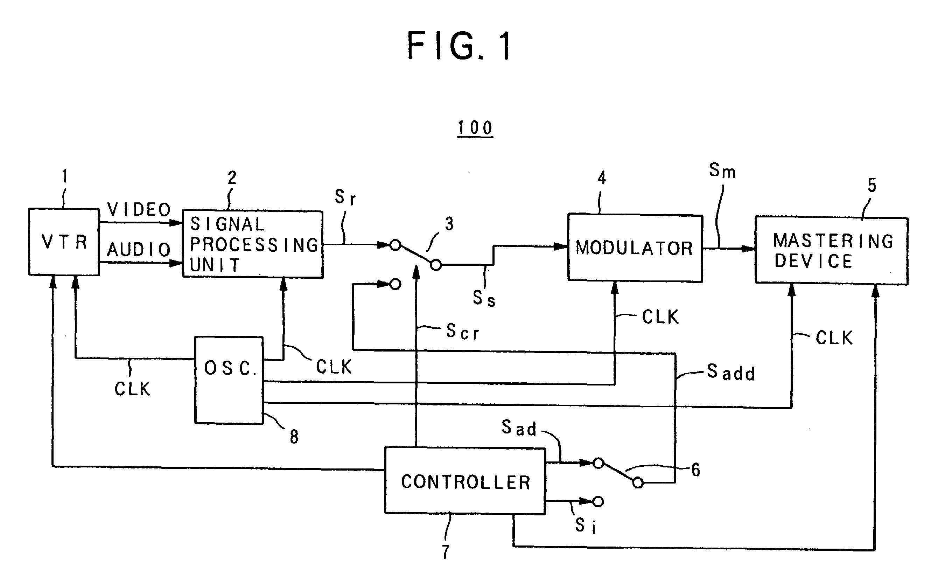

First, an apparatus for recording information will be described with reference to FIGS. 1 to 5. FIG. 1 illustrates a configuration of an information recording apparatus according to the present invention. As illustrated, the information recording apparatus 100 includes a VTR 1, a signal processing unit 2, an adder 3, a modulator 4, a mastering device 5, a multiplexer 6, a controller 7 and an oscillator 8. The VTR 1 temporarily stores audio and/or video information to be recorded on an optical disc. The signal processing unit 2 conducts an A/D conversion onto the audio/video signal outputted by the VTR 1, compresses the digital signal thus obtained according to MPEG system, for example, and multiplexes the audio signal and the video signal by means of the time-division multiplexing to output the recorded information signal Sr. The adder 3 performs the time-division multiplex of the recorded information signal Sr and the multiplexed additional information signal Sadd described later in response to the control signal Scr supplied from the controller 7, and outputs the stream Ss. The modulator 4 adds the error correction code such as Reed-Solomon code to the stream Ss and modulates the stream Ss by the two-to-three modulation, and outputs the disc-recorded signal Sm. The mastering device 5 records the disc-recorded signal Sm on the stamper disc which is used as a master disc for manufacturing the optical discs. The multiplexer 6 multiplexes the additional information signal Sad, corresponding to the additional information such as access information, with the reproduction apparatus specifying signal Si which specifies the reproduction apparatus for reproducing the recorded information signal Sr, and outputs the multiplexed additional information signal Sadd. The oscillator 8 generates a reference clock signal CLK for the synchronization control of the components installed in the information recording apparatus 100. The controller 7 controls the whole components of the information recording apparatus 100.

Next, the operation of the information recording apparatus 100 will be described. Audio and video information temporarily stored in the VTR 1 is A/D-converted by the signal processing unit 2, and is subsequently compressed according to MPEG system. The compressed signal is time-division multiplexed by the signal processing unit 2 and outputted as the recorded information signal Sr. Thereafter, the recorded information signal Sr is time-division multiplexed with the additional information signal Sad by the adder 3 to be outputted as the stream Ss. The multiplexed additional information signal Sadd includes the additional information signal Sad corresponding to the additional information such as access information and the reproduction apparatus specifying information Si corresponding to the reproduction apparatus specifying information. The access information includes the correspondence between the contents of the recorded information (e.g., pieces of information files, etc.) and the address of the recorded information on the disc. The reproduction apparatus specifying signal Si specifies the apparatus which is allowed to reproduce the recorded signal on the optical disc. Thereafter, the modulator 4 adds the error correction code such as Reed-Solomon code to the stream Ss, and conducts two-to-three modulation thereon. The mastering device 5 records the disc-recorded signal Sm on the stamper disc. Subsequently, replica discs are manufactured using the stamper disc by way of replication method.

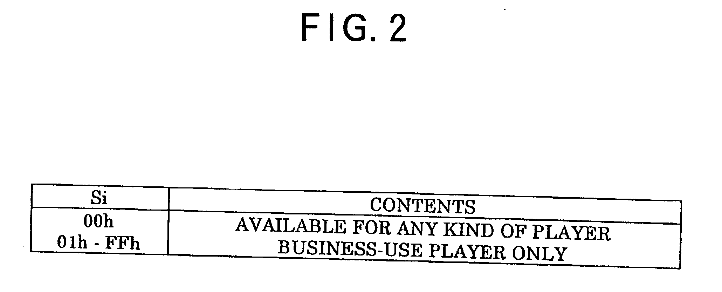

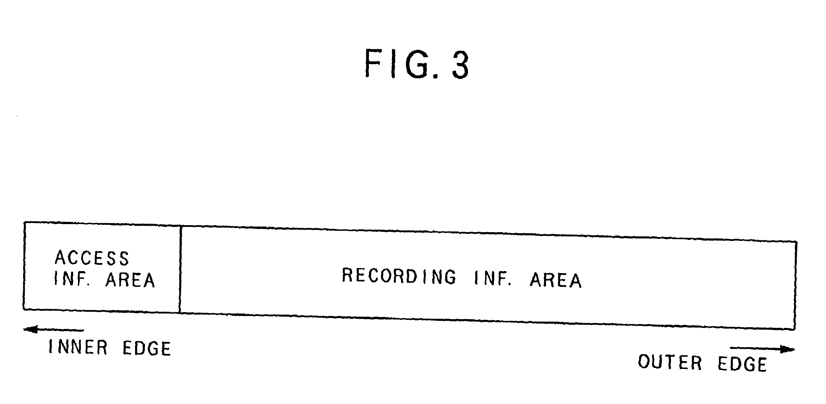

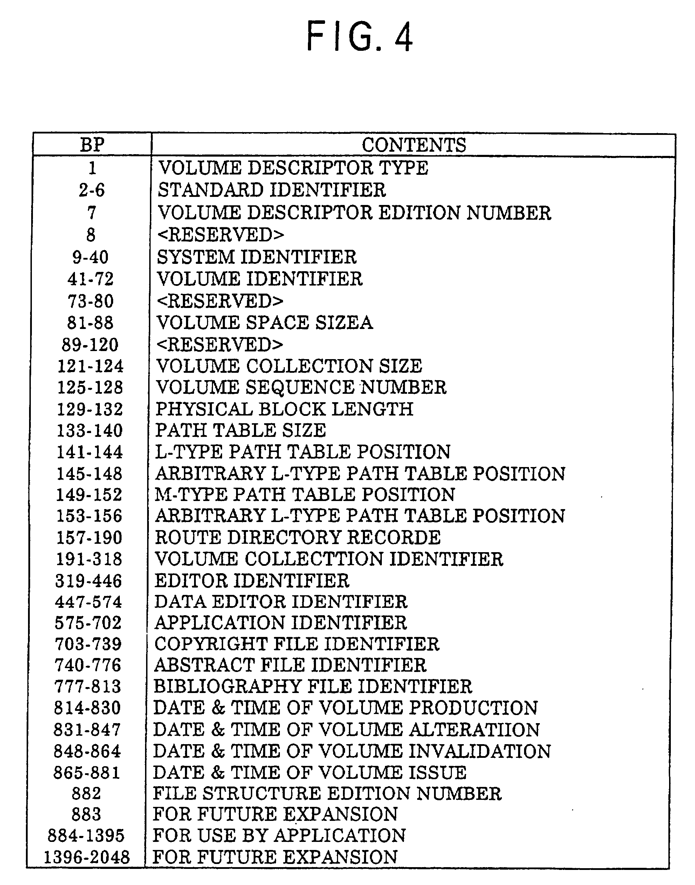

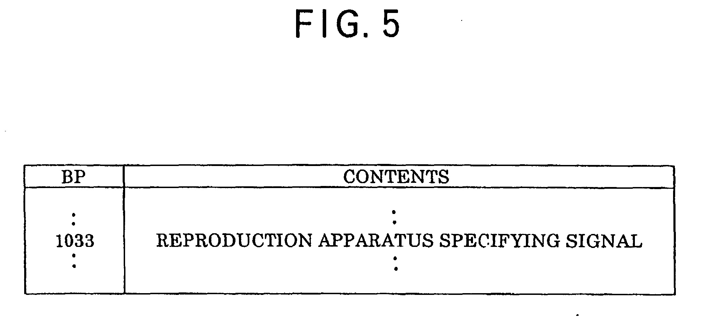

Next, the description will be given to the reproduction apparatus specifying signal Si which is multiplexed with the additional information signal Sad by the multiplexer 6, with reference to FIG. 2. The reproduction apparatus specifying signal Si (i.e., reproduction apparatus specifying information) specifies the reproduction apparatus by which the signal recorded on the subject optical disc is reproduced. FIG. 2 shows a case in which one byte is assigned to the reproduction apparatus specifying signal. In this example, if the reproduction apparatus specifying signal Si is "00h" ("h" indicates hexadecimal number), the signal recorded on the optical disc is allowed to be reproduced by the reproduction apparatus of any type, including the business-use type and the private-use type. On the other hand, if the reproduction apparatus specifying signal Si ranges between "01h" to "FFh", the signal recorded on the optical disc is allowed to be reproduced only by the business-use reproduction apparatus, i.e., reproduction by the private-use reproduction apparatus being prohibited. The additional information signal Sad with which the reproduction apparatus specifying signal Si is multiplexed includes information relating to the random access, and is recorded, as shown in FIG. 3, on the optical disc at the access information area, i.e., other than the recording information area where recorded information (the recorded information signal Sr) is recorded. Specifically, the reproduction apparatus specifying signal Si is recorded on the optical disc at the innermost circumferential area where information recorded therein is read out immediately after the optical disc is set in the reproduction apparatus. This is because, additional information such as access information is needed to be read out prior to the reading of the recorded information such as audio/video information at the time of reproduction. If audio and video information to be recorded is managed in compliance with the standard of ISO (International Organization for Standardization) 9660, the additional information signal Sad corresponds to the volume descriptor (volume management information). The contents of basic volume descriptors is shown in FIG. 4. As shown in FIG. 4, the basic volume descriptors assigned to the byte number (hereinafter represented by "BP") BP 884 - BP 1395 are reserved for the use by the applications (i.e., left blank), and hence the reproduction apparatus specifying signal Si is assigned, by the multiplexer 6, to one of the descriptors in the reserved byte numbers, e.g., BP 1033, as shown in FIG. 5.

As described above, according to the information recording apparatus 100, the reproduction apparatus specifying signal Si specifying the reproduction apparatus allowed to reproduce information recorded on the optical disc is recorded at the innermost recording area. Therefore, it is possible to discriminate at the time of reproduction whether information recorded on the disc is for business use or for the private use, i.e., available only for the business-use reproduction apparatus or available for any kind of reproduction apparatus including the private-use apparatus.

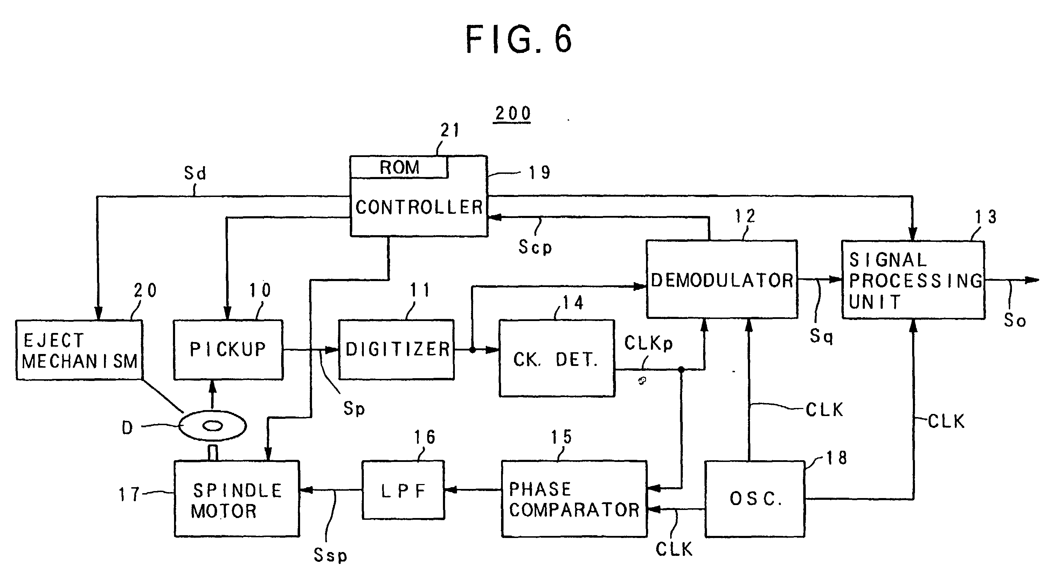

Next, an embodiment of the information reproduction apparatus according to the present invention will be described with reference to FIGS. 6 to 8. First, the configuration of the information reproduction apparatus will be described with reference to FIG. 6. As shown in FIG. 6, the information reproduction apparatus 200 includes an optical pickup 10, a digitizer 11, a demodulator 12, a signal processing unit 13, a clock detector 14, a phase comparator 15, a Low Pass Filter (LPF) 16, a spindle motor 17, an oscillator 18, a controller 19 and a disc ejecting mechanism 20. The optical pickup 10 reads out the disc-recorded signal Sm including the recorded information signal Sr and the multiplexed additional information signal Sadd from the optical disc D which is recorded by the aforementioned information recording apparatus 100, and outputs the read-out signal Sp. The digitizer 11 digitizes the read-out signal Sp by a predetermined threshold. The demodulator 12 demodulates the digitized read-out signal, performs the error correction, and outputs the resultant signal as the reproduction signal Sq. The signal processing unit 13 makes an expansion of the reproduction signal Sq according to MPEG system, and then makes the D/A conversion on the expanded signal to output the output signal So. The clock detector 14 detects the clock component from the digitized detection signal Sp, and outputs it as the detected clock signal CLKp. The oscillator 18 outputs the reference clock signal CLK used to achieve the synchronization control of the components in the information reproduction apparatus 200. The phase comparator 15 makes a phase-comparison on the detected clock signal CLKp and the reference clock signal CLK from the oscillator 18, and outputs the comparison signal. The LPF 16 eliminates the high-frequency component from the comparison signal and outputs the filtered signal as the control signal Ssp for controlling the rotation speed of the spindle motor 17. The spindle motor 17 rotates the optical disc D under the control based on the control signal Ssp. The controller 19 performs total control of the components in the information reproduction apparatus 200. In addition, the controller 19 discriminates, based on the reproduction apparatus specifying signal Si, whether the current reproduction apparatus coincides with the reproduction apparatus specified by the reproduction apparatus specifying signal Si, and prohibits the reproduction by the current reproduction apparatus when the coincidence of the reproduction apparatus is not confirmed. The disc ejecting mechanism 20 ejects the optical disc D in response to the instruction from the controller 19 . Since the information recording apparatus 100 modulates the clock signal and records it together with the recording signal Sr so that the clock signal can be detected at the time of reproduction, the clock detector 14 can detects the clock signal. CLKp.

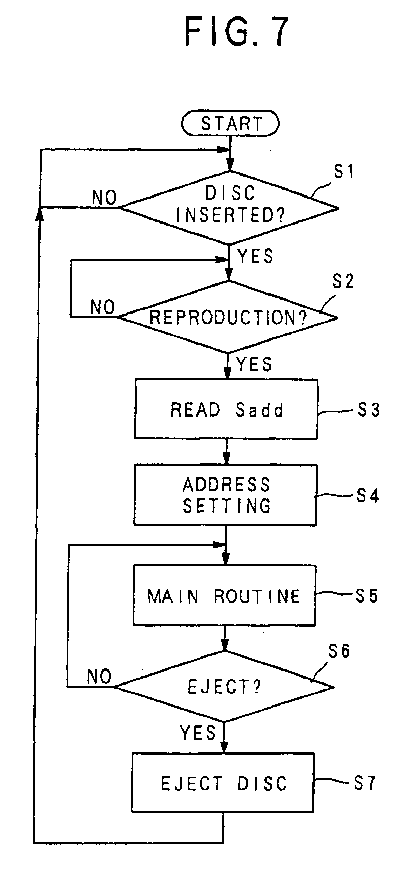

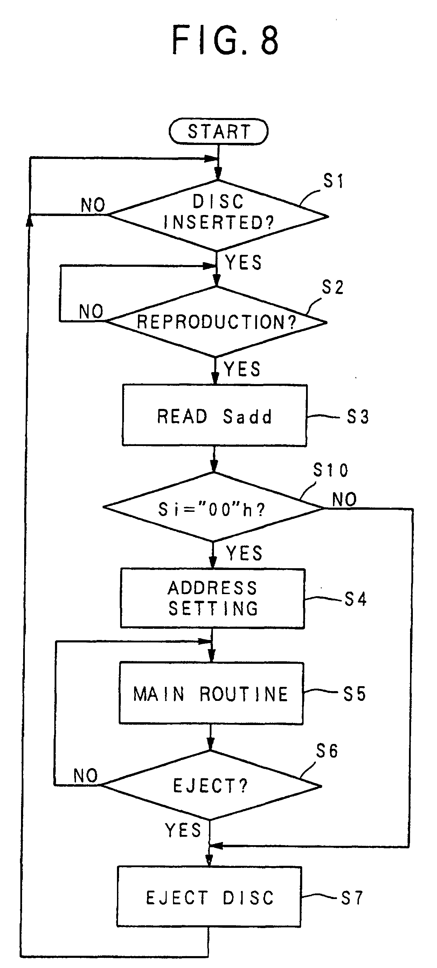

Next, the operation of the information reproduction apparatus 200 will be described with reference to FIGS. 7 and 8. The information reproduction apparatus 200 performs different operation when it is used as the business-use apparatus and as the private-use apparatus. The operation of the information reproduction apparatus is determined by the program stored in the ROM 21 in the controller 19. Namely, when a ROM 21 for the business-use is installed the reproduction apparatus 200 acts as a business-use type apparatus, and when the ROM 21 for the private-use is installed the reproduction apparatus 200 acts as a private-use type apparatus. The detail of the programs are shown in FIGS. 7 and 8. Namely, in the business-use the program for the business use (see. FIG. 7) is stored in the ROM 21, and in the private use the program for the private use (see. FIG. 8) is stored in the ROM 21. The controller 19 performs the appropriate operation according to the program thus stored.

First , the operation in the business use will be described with reference to FIG. 7. First of all, it is checked whether or not a disc is inserted in the reproduction apparatus 200 in step S1. If no disc has been inserted (step S1:NO), step S1 is repeated. If a disc is inserted (step S1:YES), then it is judged whether or not the start of the reproduction has been instructed (step S2). Until the start of the reproduction is instructed via an input device such as a remote controller, the controller 19 maintains the waiting status. If the start instruction is inputted (step S2:YES), the controller 19 makes the spindle motor 17 rotate to pull-in the phase locked loop, and reads out the multiplexed additional signal Sadd from the innermost area of the optical disc (step S3). Here, the reproduction apparatus 200 is of the business-use, and hence the operation thereof is not affected by the contents of the reproduction apparatus specifying signal Si included in the multiplexed additional signal Sadd. Namely, the controller 19 proceeds to next step irrespective of the contents of the reproduction apparatus specifying signal Si. Then, the controller 19 reads out access information included in the additional information signal Sad, and sets information relating to the recorded information and the files to the table in the form of the physical address. Then, the controller 19 executes the main routine which performs normal reproductions of the recorded information, special reproductions such as jump or skip reproduction and access operations to the target information (step S5). Then, it is judged whether or not the instruction to eject the disc has been inputted by a user (step S6). If not, the controller 19 continues the operation of the main routine, and if the disc ejection is instructed, the controller 19 outputs the control signal Sd to the disc ejecting mechanism 20 so that the disc is ejected (step S7). Thereafter, when a disc is again inserted, the controller 19 executes the above operation from the step S1. As described above, in the business use, the reproduction apparatus 200 reproduces the information on the optical disc irrespective of the contents of the reproduction apparatus specifying information.

Next, the operation of the reproduction apparatus of the private use will be described with reference to FIG. 8. It is noted that, in FIG. 8, identical step numbers are attached to the steps identical to those shown in FIG. 7, and the repeated description will be omitted. In the operation of the private-use reproduction apparatus, step S10 is introduced. Namely, after the multiplexed additional information signal Sadd is read out, the controller 19 judges whether or not the reproduction apparatus specifying signal Si is equal to "00h" which indicates that the recorded information can be reproduced by any kind of reproduction apparatus (step S10). If step S10 results in YES, the operation goes to step S4 to start reproduction of the recorded information (steps S4 to S6). On the other hand, if step S10 results in NO, i.e., it means that the information recorded on the currently-inserted disc can be reproduced only by the reproduction apparatus of business use and hence the reproduction apparatus currently used is prohibited to reproduce the recorded information. Namely, since the subject reproduction apparatus for the private use is not the one specified by the reproduction apparatus specifying signal Si (see. FIG. 2), the controller 19 gives the control signal Sd to the disc ejecting mechanism 20 to prohibit the reproduction (step S7). As described above, in case of the reproduction apparatus for the private use, the reproduction is not started and the disc is automatically ejected if the recorded information of the disc is not available for the private-use reproduction apparatus.

As described above, according to the information reproduction apparatus of the present invention, if an optical disc carrying information to be reproduced only by the business-use reproduction apparatus is inserted to the private-use reproduction apparatus, the reproduction does not begin and the disc is automatically ejected. Therefore, it is possible to prohibit the reproduction of the business-use optical disc by the private-use reproduction apparatus, without changing the standard of the disc, only by way of changing the ROM installed in the reproduction apparatus.

In the above described embodiments, the reproduction apparatus specified by the reproduction apparatus specifying information is the business-use reproduction apparatus. However, the application of the present invention is not limited to this example, and more than two types of reproduction apparatuses may be specified by the reproduction apparatus specifying information. In such a case, the reproduction apparatus specifying signal Si represents more than two different meanings, and the judgment in step S10 of FIG. 8 is performed for the times corresponding number of the reproduction apparatus specifying information. Thus prepared program is stored in the ROM to be installed in the private-use reproduction apparatus. Further, the reproduction apparatus may be so configured that the user manipulates the switch or the like to alter the setting of the reproduction apparatus specifying information. In this case, the reproduction is prohibited if the reproduction apparatus is not specified by the reproduction apparatus specifying information thus altered. More specifically, at the time of the recording, the reproduction apparatus specifying information is recorded to indicate that the recorded information is for adult only. On the side of the reproduction apparatus, the grown-ups (e.g., parents) sets the reproduction apparatus to be for the kids only (i.e., information for adult only cannot be reproduced by manipulating the operation keys or the like). By this treatment, if the kids try to watch video information for adult only, their reproduction apparatus cannot reproduce the information for adult only any more. In this case, the reproduction apparatus can normally reproduce any kind of information without limitation in its initial state, but once the some kind of special setting is made by user, only the limited information can be reproduced and the prohibited information cannot be reproduced any more.

## Claims

1. An apparatus (100) for recording information on a recording medium comprising:
a processing unit (2) for receiving recording information to be recorded and processing the recording information to output a recording signal (Sr);
a multiplexer (6) for multiplexing reproduction apparatus specifying information (Si) which specifies reproduction apparatuses allowed to reproduce the recording signal with additional information (Sad) corresponding to the recording information and outputting an additional signal (Sadd), said reproduction apparatus specifying information including one of either a first code indicating that said recording information is allowed to be reproduced by any kind of reproduction apparatus or a second code indicating that said recording information is allowed to be reproduced only by a reproduction apparatus for business use; and
a recording unit (5) for recording the recording signal and the additional signal on said recording medium.

2. An apparatus according to Claim 1, wherein said recording unit records the recording signal and the additional signal separately on said recording medium.

3. An apparatus according to Claim 2, wherein said recording unit records the additional signal on said recording medium at an innermost circumferential area.

4. An apparatus according to Claim 1, wherein said recording medium comprises an optical disc, and said recording unit records the additional signal on said optical disc at an area which is read out by a reproduction apparatus prior to the recording signal.

5. An apparatus according to Claim 1, wherein said multiplexer multiplexes the additional information and the reproduction apparatus specifying information by means of time-division multiplexing.

6. An apparatus (200) for reproducing information from a recording medium (D) comprising:
a reading unit (10) for reading a recording information from said recording medium and outputting a read-out signal (Sp), said recording information including main information and additional information including reproduction apparatus specifying information, said reproduction apparatus specifying information including one of either a first code indicating that said recording information is allowed to be reproduced by any kind of reproduction apparatus or a second code indicating that said recording information is allowed to be reproduced only by a reproduction apparatus for business use;
a demodulator (12) for demodulating the read-out signal and outputting a demodulated signal (Sq);
a detecting unit (19) for detecting the reproduction apparatus specifying information from the demodulated signal;
a reproducing unit (13) for reproducing the main information;
a judging unit (19) for judging whether or not said apparatus is allowed to reproduce said recording information on the basis of the reproduction apparatus specifying information; and
a control unit (19) for prohibiting a reproduction of the main information by the reproducing unit when said judging unit judges that said reproduction apparatus is not allowed by the reproduction apparatus specifying information.

7. An apparatus according to Claim 6, wherein said reading unit reads out the reproduction apparatus specifying information prior to the main information.

8. An apparatus according to Claim 6, wherein said recording medium comprises an optical disc, and said reading unit reads out the additional information from an innermost area of said optical disc.

9. An apparatus according to Claim 6, further comprising ejecting unit (20) for ejecting said recording medium, and said control means allows said ejecting unit to eject said recording medium when said judging unit judges that said reproduction apparatus is not specified by the reproduction apparatus specifying information.

10. A method for recording information on a recording medium (D) comprising the stage of:
receiving recording information to be recorded and processing the recording information to output a recording signal (Sr);
multiplexing reproduction apparatus specifying information (Si) which specifies reproduction apparatuses allowed to reproduce the recording signal with additional information (Sad) corresponding to the recording information and outputting an additional signal (Sadd), said reproduction apparatus specifying information including a first code indicating that said recording information is allowed to be reproduced by any kind of reproduction apparatus and a second code indicating that said recording information is allowed to be reproduced only by a reproduction apparatus for business use and
recording the recording signal and the additional signal on said recording medium.

11. A method for reproducing information from a recording medium (D) comprising the steps of:
reading a recording information from said recording medium and outputting a read-out signal (Sp), said recording information including main information and additional information including reproduction apparatus specifying information;
demodulating the read-out signal and outputting a demodulated signal (Sq);
detecting the reproduction apparatus specifying information from the demodulated signal, said reproduction apparatus specifying information including a first code indicating that said recording information is allowed to be reproduced by any kind of reproduction apparatus and a second code indicating that said recording information is allowed to be reproduced only by a reproduction apparatus for business use;
judging whether or not said apparatus is allowed to reproduce said recording information on the basis of the reproduction apparatus specifying information; and
prohibiting a reproduction of said recording medium when said judging unit judges that said reproduction apparatus is not allowed by the reproduction apparatus specifying information.

## Patentansprüche

1. Vorrichtung (100) zum Aufzeichnen von Informationen auf einem Aufzeichnungsmedium, die folgendes umfasst:
eine Verarbeitungseinheit (2) zum Empfangen von aufzuzeichnenden Aufzeichnungsinformationen und zum Verarbeiten der Aufzeichnungsinformationen zum Ausgeben eines Aufzeichnungssignals (Sr);
einen Multiplexer (6) zum Multiplexieren von Wiedergabevorrichtung-Vorgabeinformationen (Si), die Wiedergabevorrichtungen vorgeben, die das Aufzeichnungssignal wiedergeben dürfen, mit Zusatzinformationen (Sad), die den Aufzeichnungsinformationen entsprechen, und zum Ausgeben eines Zusatzsignals (Sadd), wobei die genannten Wiedergabevorrichtung-Vorgabeinformationen einen ersten Code, der anzeigt, dass die genannten Aufzeichnungsinformationen von jeder Art von Wiedergabevorrichtung wiedergegeben werden dürfen, oder einen zweiten Code beinhalten, der anzeigt, dass die genannten Aufzeichnungsinformationen nur von einer Wiedergabevorrichtung für Gewerbezwecke wiedergegeben werden dürfen; und
eine Aufzeichnungseinheit (5) zum Aufzeichnen des Aufzeichnungssignals und des Zusatzsignals auf dem genannten Aufzeichnungsmedium.

2. Vorrichtung nach Anspruch 1, wobei die genannte Aufzeichnungseinheit das Aufzeichnungssignal und das Zusatzsignal separat auf dem genannten Aufzeichnungsmedium aufzeichnet.

3. Vorrichtung nach Anspruch 2, bei der die genannte Aufzeichnungseinheit das Zusatzsignal auf dem genannten Aufzeichnungsmedium in einem ganz innen liegenden Umfangsbereich aufzeichnet.

4. Vorrichtung nach Anspruch 1, bei der das genannte Aufzeichnungsmedium eine Bildplatte umfasst und die genannte Aufzeichnungseinheit das Zusatzsignal auf der genannten Bildplatte in einem Bereich aufzeichnet, der von einer Wiedergabevorrichtung vor dem Aufzeichnungssignal gelesen wird.

5. Vorrichtung nach Anspruch 1, bei der der genannte Multiplexer die Zusatzinformationen und die Wiedergabevorrichtung-Vorgabeinformationen mit Zeitmultiplextechnik multiplexiert.

6. Vorrichtung (200) zum Wiedergeben von Informationen von einem Aufzeichnungsmedium (D), die folgendes umfasst:
eine Leseeinheit (10) zum Lesen von Aufzeichnungsinformationen von dem genannten Aufzeichnungsmedium und zum Ausgeben eines Lesesignals (Sp), wobei die genannten Aufzeichnungsinformationen Hauptinformationen und Zusatzinformationen einschließlich Wiedergabevorrichtung-Vorgabeinformationen beinhalten, wobei die genannten Wiedergabevorrichtung-Vorgabeinformationen einen ersten Code, der angibt, dass die genannten Aufzeichnungsinformationen von jeder Art von Wiedergabevorrichtung wiedergegeben werden dürfen, oder einen zweiten Code beinhalten, der angibt, dass die genannten Aufzeichnungsinformationen nur von einer Wiedergabevorrichtung für Gewerbezwecke wiedergegeben werden dürfen;
einen Demodulator (12) zum Demodulieren des gelesenen Signals und zum Ausgeben eines demodulierten Signals (Sq);
eine Erkennungseinheit (19) zum Erkennen der Wiedergabevorrichtung-Vorgabeinformationen aus dem demodulierten Signal;
eine Wiedergabeeinheit (13) zum Wiedergeben der Hauptinformationen;
eine Beurteilungseinheit (19) zum Beurteilen, ob die genannte Vorrichtung die genannten Aufzeichnungsinformationen wiedergeben darf oder nicht, auf der Basis der Wiedergabevorrichtung-Vorgabeinformationen; und
eine Steuereinheit (19) zum Verhindern einer Wiedergabe der Hauptinformationen durch die Wiedergabeeinheit, wenn die genannte Beurteilungseinheit beurteilt, dass die genannte Wiedergabevorrichtung von den Wiedergabevorrichtung-Vorgabeinformationen nicht zugelassen wird.

7. Vorrichtung nach Anspruch 6, bei der die genannte Leseeinheit die Wiedergabevorrichtung-Vorgabeinformationen vor den Hauptinformationen liest.

8. Vorrichtung nach Anspruch 6, bei der das genannte Aufzeichnungsmedium eine Bildplatte umfasst und die genannte Leseeinheit die Zusatzinformationen vom innersten Bereich der genannten Bildplatte liest.

9. Vorrichtung nach Anspruch 6, ferner umfassend eine Auswurfeinheit (20) zum Auswerfen des genannten Aufzeichnungsmediums, wobei das genannte Steuermittel es zulässt, dass die genannte Auswurfeinheit das genannte Aufzeichnungsmedium auswirft, wenn die genannte Beurteilungseinheit beurteilt, dass die genannte Wiedergabevorrichtung in den Wiedergabevorrichtung-Vorgabeinformationen nicht vorgegeben ist.

10. Verfahren zum Aufzeichnen von Informationen auf einem Aufzeichnungsmedium (D), umfassend die folgenden Schritte:
Empfangen von aufzuzeichnenden Aufzeichnungsinformationen und Verarbeiten der Aufzeichnungsinformationen zum Ausgeben eines Aufzeichnungssignals (Sr);
Multiplexieren von Wiedergabevorrichtung-Vorgabeinformationen (Si), die Wiedergabevorrichtungen vorgeben, die das Aufzeichnungssignal wiedergeben dürfen, mit Zusatzinformationen (Sad), die den Aufzeichnungsinformationen entsprechen, und Ausgeben eines Zusatzsignals (Sadd), wobei die genannten Wiedergabevorrichtung-Vorgabeinformationen einen ersten Code, der anzeigt, dass die genannten Aufzeichnungsinformationen von jeder Art von Wiedergabevorrichtung wiedergegeben werden dürfen, und einen zweiten Code beinhalten, der anzeigt, dass die genannten Aufzeichnungsinformationen nur von einer Wiedergabevorrichtung für Gewerbezwecke wiedergegeben werden dürfen; und
Aufzeichnen des Aufzeichnungssignals und des Zusatzsignals auf dem genannten Aufzeichnungsmedium.

11. Verfahren zum Wiedergeben von Informationen von einem Aufzeichnungsmedium (D), umfassend die folgenden Schritte:
Lesen von Aufzeichnungsinformationen von dem genannten Aufzeichnungsmedium und Ausgeben eines Lesesignals (Sp), wobei die genannten Aufzeichnungsinformationen Hauptinformationen und Zusatzinformationen einschließlich Wiedergabevorrichtung-Vorgabeinformationen beinhalten;
Demodulieren des gelesenen Signals und Ausgeben eines demodulierten Signals (Sq) ;
Erkennen der Wiedergabevorrichtung-Vorgabeinformationen aus dem demodulierten Signal, wobei die genannten Wiedergabevorrichtung-Vorgabeinformationen einen ersten Code, der anzeigt, dass die genannten Aufzeichnungsinformationen von jeder Art von Wiedergabevorrichtung wiedergegeben werden dürfen, und einen zweiten Code beinhalten, der anzeigt, dass die genannten Aufzeichnungsinformationen nur von einer Wiedergabevorrichtung für Gewerbezwecke wiedergegeben werden dürfen;
Beurteilen, ob die genannte Vorrichtung die genannten Aufzeichnungsinformationen wiedergeben darf oder nicht, auf der Basis der Wiedergabevorrichtung-Vorgabeinformationen; und
Verhindern einer Wiedergabe des genannten Aufzeichnungsmediums, wenn die genannte Beurteilungseinheit beurteilt, dass die genannte Wiedergabevorrichtung in den Wiedergabevorrichtung-Vorgabeinformationen nicht zugelassen wird.

## Revendications

1. Un appareil (100) pour enregistrer des informations sur un support d'enregistrement, comprenant :
un processeur (2) pour recevoir l'information d'enregistrement à enregistrer et pour traiter l'information d'enregistrement afin de sortir un signal d'enregistrement (Sr) ;
un multiplexeur (6) pour multiplexer l'information qui spécifie l'appareil de reproduction (Si), laquelle spécifie les appareils de reproduction autorisés à reproduire le signal d'enregistrement avec des informations supplémentaires (Sad) correspondant à l'information d'enregistrement et pour sortir un signal supplémentaire (Sadd), ladite information de spécification des appareils de reproduction incluant soit un premier code qui indique que ladite information d'enregistrement est autorisée à être reproduite par n'importe quel type d'appareil de reproduction, soit un deuxième code qui indique que ladite information d'enregistrement n'est autorisée à être reproduite que par un appareil de reproduction à usage commercial ; et
un enregistreur (5) pour enregistrer le signal d'enregistrement et le signal supplémentaire sur ledit support d'enregistrement.

2. Un appareil selon la Revendication 1, dans lequel ledit enregistreur enregistre le signal d'enregistrement et le signal supplémentaire séparément sur ledit support d'enregistrement.

3. Un appareil selon la Revendication 2, dans lequel ledit enregistreur enregistre le signal supplémentaire sur ledit support d'enregistrement dans une région circonférentielle la plus interne.

4. Un appareil selon la Revendication 1, dans lequel ledit support d'enregistrement comprend un disque optique, et ledit enregistreur enregistre le signal supplémentaire sur ledit disque optique dans une zone qui est lue par un appareil de reproduction avant le signal d'enregistrement.

5. Un appareil selon la Revendication 1, dans lequel ledit multiplexeur multiplexe l'information supplémentaire et l'information qui spécifie les appareils de reproduction au moyen d'un multiplexage par répartition dans le temps.

6. Un appareil (200) pour reproduire des informations à partir d'un support d'enregistrement (D) comprenant :
un lecteur (10) pour lire une information d'enregistrement à partir dudit support d'enregistrement et sortir un signal de lecture (Sp), ladite information d'enregistrement incluant une information principale et une information supplémentaire qui inclut l'information qui spécifie les appareils de reproduction, ladite information qui spécifie les appareils de reproduction incluant soit un premier code qui indique que ladite information d'enregistrement est autorisée à être reproduite par n'importe quel type d'appareil de reproduction, soit un deuxième code qui indique que ladite information d'enregistrement n'est autorisée à être reproduite que par un appareil de reproduction à usage commercial ;
un démodulateur (12) pour démoduler le signal de lecture et sortir un signal démodulé (Sq) ;
un détecteur (19) pour détecter l'information qui spécifie les appareils de reproduction à partir du signal démodulé ;
une unité de reproduction (13) pour reproduire l'information principale ;
une unité de jugement (19) pour juger si ledit appareil est ou non autorisé à reproduire ladite information d'enregistrement sur la base de l'information qui spécifie les appareils de reproduction ; et
un contrôleur (19) pour proscrire une reproduction de l'information principale par l'unité de reproduction lorsque ladite unité de jugement juge que ledit appareil de reproduction n'est pas autorisé par l'information qui spécifie les appareils de reproduction.

7. Un appareil selon la Revendication 6, dans lequel ledit lecteur lit l'information qui spécifie les appareils de reproduction avant l'information principale.

8. Un appareil selon la Revendication 6, dans lequel ledit support d'enregistrement comprend un disque optique, et ledit lecteur lit l'information supplémentaire à partir de la zone la plus intérieure dudit disque optique.

9. Un appareil selon la Revendication 6, qui comprend de plus un éjecteur (20) pour éjecter ledit support d'enregistrement, et lesdits moyens de commande permettent audit éjecteur d'éjecter ledit support d'enregistrement lorsque ladite unité de jugement juge que ledit appareil de reproduction n'est pas spécifié par l'information qui spécifie les appareils de reproduction.

10. Un procédé d'enregistrement d'information sur un support d'enregistrement (D) comportant les étapes suivantes :
réception d'une information d'enregistrement à enregistrer et traitement de l'information d'enregistrement pour sortir un signal d'enregistrement (Sr) ;
multiplexage de l'information qui spécifie les appareils de reproduction (Si) qui spécifie les appareils de reproduction autorisés à reproduire le signal d'enregistrement avec l'information supplémentaire (Sad) qui correspond à l'information d'enregistrement et sortie d'un signal supplémentaire (Sadd), ladite information qui spécifie les appareils de reproduction incluant un premier code qui indique que ladite information d'enregistrement est autorisée à être reproduite par n'importe quel type d'appareil de reproduction, soit un deuxième code qui indique que ladite information d'enregistrement n'est autorisée à être reproduite que par un appareil de reproduction à usage commercial ; et
enregistrement du signal d'enregistrement et du signal supplémentaire sur ledit support d'enregistrement.

11. Un procédé de reproduction d'information à partir d'un support d'enregistrement (D) comportant les étapes suivantes :
lecture d'une information d'enregistrement à partir dudit support d'enregistrement et sortie d'un signal de lecture; (Sp), ladite information d'enregistrement incluant une information principale et une information supplémentaire qui inclut l'information qui spécifie les appareils de reproduction ;
démodulation du signal de lecture et sortie d'un signal démodulé (Sq) ;
détection de l'information qui spécifie les appareils de reproduction à partir du signal démodulé, ladite information qui spécifie les appareils de reproduction incluant un premier code qui indique que ladite information d'enregistrement est autorisée à être reproduite par n'importe quel type d'appareil de reproduction, et un deuxième code qui indique que ladite information d'enregistrement n'est autorisée à être reproduite que par un appareil de reproduction à usage commercial ;
jugement que ledit appareil est ou non autorisé à reproduire ladite information d'enregistrement sur la base de l'information qui spécifie les appareils de reproduction ; et
proscription d'une reproduction dudit support d'enregistrement lorsque ladite unité de jugement juge que ledit appareil de reproduction n'est pas autorisé par l'information qui spécifie les appareils de reproduction.
